# EUROPEAN PATENT SPECIFICATION

(11) **EP 1 953 417 B1**
(45) Date of publication and mention of the grant of the patent: **09.09.2009**
(21) Application number: 07300755.1
(22) Date of filing: 31.01.2007
(51) Int. Cl.: F16H 1/16, F16H 55/22, F16H 61/32

(54) **Worm wheel, gear, and electric motor**
Schneckenrad, Schneckengetriebe und Elektromotor
Roue à vis sans fin, engrenage, et moteur électrique

(43) Date of publication of application: 06.08.2008
(73) Proprietor: Alcatel Lucent, 75008 Paris (FR)
(72) Inventor: Gerlich, Knut, 78073 Bad Dürrheim (DE); Tascher, Gerhard, 79848 Bonndorf (DE); Schneider, Andrej, 79848 Bonndorf (DE); Pfendler, Klaus, 79848 Bonndorf (DE)
(74) Representative: Brose, Gerhard

(56) References cited:
- EP-A- 1 529 984
- GB-A- 2 362 196
- US-A- 6 043 616
- US-A1- 2003 034 196

## Description

The invention relates to a worm wheel according to the preamble of claim 1, to a gear according to the preamble of claim 3, and to an electric motor according to the preamble of claim 4.

Such devices are known from the UK Patent Application GB 2 363 196 A.

The invention was made in the field of door automation, but can be used also in other fields.

Electric motors used for door automation often use worm gears. They do not need too much gear reduction, in our case a reduction of 12:1, where worm gears are not yet self-locking. Doors normally must not be locked. Other similar applications like window lifts for cars should be self-locking; this can be achieved with worm gears and higher reduction.

Most of possible applications are low-cost applications. But both, the worm wheel and the connection thereto, are complex parts.

The problem to be solved therefor lies in finding a solution that can be produced in a low-cost manner.

This problem is solved according to the invention by a worm wheel according to the teaching of claim 1, by a gear according to the teaching of claim 3, and by an electric motor according to the teaching of claim 4.

The invention is based on the insight, that in most situations the high mechanical propertied of state of the art solutions are not really necessary. And even for situations with some higher mechanical requirements a simple improvement is given.

Further embodiments of the invention are to be fond in the subclaims and in the following description.

In the following the invention will be described with the aid of the enclosed drawings.
- Figure 1: shows a perspective view of a worm wheel according to the invention.
- Figure 2: shows a perspective view of a gear according to the invention.
- Figure 3: shows a perspective view of a motor according to the invention.
- Figure 4: shows a perspective view of an internal stiffening for a worm wheel according to the invention.

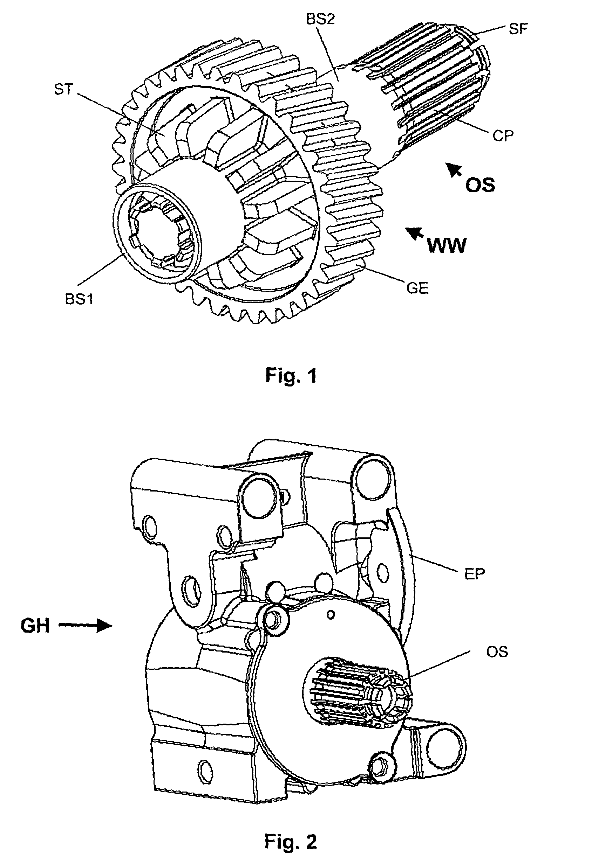

Figure 1 shows a worm wheel according to the invention. It shows mainly the proper worm wheel WW and an output shaft OS. According to the invention these both parts are manufactured as one piece made out of plastic material. We use polyacetal (POM), especially Delrin 100 TM.

The worm wheel WW carries a gearing GE with helical gearing corresponding to the inclined gearing of a worm gear. As the worm wheel according to the invention is made out of plastic material, it is easy to provide it with stiffenings ST. Similar stiffenings may be applied on the rear side of the worm wheel WW. We also see a bearing shaft BS1 for applying a ball bearing and inserting it into a recess of a gear housing. An alternative could be a recess in the worm wheel WW and a shaft projecting from the gear housing with a ball bearing in between.

Opposite to the worm wheel WW, seen from the bearing shaft BS1, we see the output shaft OS. A first section of this output shaft OS is foreseen for receiving another ball bearing and acts as a bearing shaft BS2. The far end of this output shaft OS, a coupling CP, is prepared for receiving a belt pulley. The embodiment of this belt pulley receiving section is considered to contain a separate invention and will be the subject of a separate patent application.

When using steel axles (or other metal axles) it is common, to use a feather key in connection with a nut in the axle for coupling the axle with output wheels. Though this is a solution very often used, it is relatively expensive and labor-intensive. When using an output shaft made out of plastic material, one has the possibility of better adapting the output shaft to the output wheel.

Here it is proposed to implement the coupling CP as a regular series of rectangular elongated teeth, corresponding to a respective inner profile of the output wheel foreseen. Here this output shaft OS carries a snap fit SF for affixing such wheel or any other means for emitting the turning moment.

In order that the ball bearing can be assembled on the bearing shaft BS2 of the output shaft OS the outer diameter of the coupling section CP must not exceed the diameter of the bearing shaft BS2.

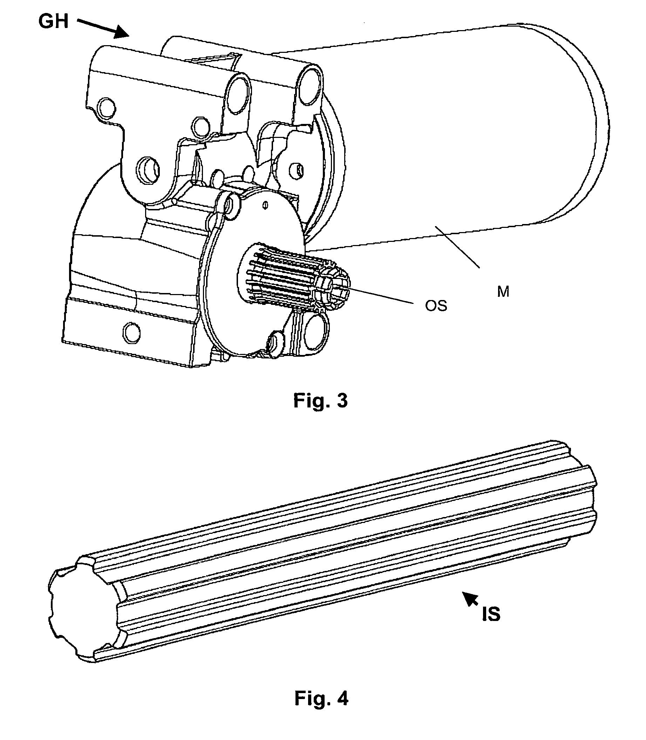

In the given example the bearing shaft BS1 shows an inner profile corresponding to an outer profile of an internal stiffening as to be described with reference to figure 4. Such stiffening can compensate in part for the reduced stability of plastic compared to metal and especially to steel.

The use of a belt drive, as foreseen in the above example, applies a bending force on the axle. Here only the material of the stiffening matters, not the cross-section of the profile. Here a plastic material with higher stability, metal, and especially steel is to be considered. We use steel for the internal stiffening.

If a high torque is to be transferred, a twist of the output shaft OS with respect to the worm wheel WW is to be expected. In this case the cross-section of the profile matters and the cross-section is to be chosen such that it hinders a twist between the internal stiffening on the one hand and the output shaft OS and the worm wheel WW on the other hand. Undulated, toothed or star-like cross-sections are examples thereof. The same also applies to the coupling CP mentioned above. Of course the outer cross-section of the internal stiffening and the inner surface of the output shaft OS and the worm wheel WW have to match. In case of using plastic material for the internal stiffening, manufacturing is no problem. In case of using steel, the drawing of a round bar steel through a suitable template is considered; the depth of the profile needs not to be very deep.

Figure 2 shows a completed gear according to the invention. Mainly we see a gear housing GH, the output shaft OS, and an end plate EP for affixing the gear to a motor. Part of the gear housing GH is a not further specified plate for closing the housing and carrying the ball bearing for bearing the output shaft OS.

Figure 3 shows the gear from figure 2 in combination with an electric motor M, the combination building an electric motor with a gear according to the invention. The end plate EP shown in figure 2 here fits to one of the end plates of the motor M.

Figure 4 finally shows an example of an internal stiffening IS for optionally fortifying the plastic material of the worm wheel in combination with the output shaft.

## Claims

1. Worm wheel (WW), that is combined with an output shaft (OS) to one piece made out of plastic material, where the worm wheel (WW) combined with the output shaft (OS) holds an internal stiffening part (IS), **characterized in, that** an outer cross-section of said internal stiffening part (IS) and an inner surface of said combined output shaft (OS) and worm wheel (WW) match such that a twist between the worm wheel (WW) combined with the output shaft (OS) and the internal stiffening part is hindered, when in use.

2. Worm wheel according to claim 1, **characterized in, that** the internal stiffening part (IS) is made out of steel.

3. Gear including a worm wheel and an output shaft, **characterized in that** the worm wheel combined with the output shaft is made according to claim 1.

4. Electric motor with a gear, **characterized in, that** the gear is made according to claim 3.

## Patentansprüche

1. Schneckenrad (WW), kombiniert mit einer Abtriebswelle (OS) zu einem Teil aus Kunststoff, wobei das mit der Abtriebswelle (OS) kombinierte Schneckenrad (WW) ein inneres Versteifungselement (IS) enthält, **dadurch gekennzeichnet, dass** ein äußerer Querschnitt des besagten inneren Versteifungselements (IS) und eine innere Oberfläche der besagten Kombination aus Abtriebswelle (OS) und Schneckenrad (WW) übereinstimmen, so dass eine Verwindung zwischen dem mit der Abtriebswelle (OS) kombinierten Schneckenrad (WW) und dem inneren Versteifungselement bei Betrieb verhindert wird.

2. Schneckenrad nach Anspruch 1, **dadurch gekennzeichnet, dass** das innere Versteifungselement (IS) aus Stahl besteht.

3. Getriebe mit einem Schneckenrad und einer Abtriebswelle, **dadurch gekennzeichnet, dass** das mit der Abtriebswelle kombinierte Schneckenrad gemäß Anspruch 1 gefertigt ist.

4. Elektromotor mit Getriebe, **dadurch gekennzeichnet, dass** das Getriebe gemäß Anspruch 3 gefertigt ist.

## Revendications

1. Roue à denture hélicoïdale (WM) combinée avec un arbre de sortie (OS) en une seule pièce constituée de matière plastique, la roue à denture hélicoïdale (WM) combinée avec l'arbre de sortie (OS) comprenant un élément raidisseur interne (IS), **caractérisée en ce qu'**une section transversale extérieure dudit élément raidisseur interne (IS) et une surface intérieure de ladite combinaison arbre de sortie (OS) et roue à denture hélicoïdale (MM) coïncident de manière à éviter la torsion entre la roue à denture hélicoïdale (WM) combinée avec l'arbre de sortie (OS) et l'élément raidisseur interne pendant l'utilisation.

2. Roue à denture hélicoïdale selon la revendication 1, **caractérisée en ce que** l'élément raidisseur interne (IS) est constitué d'acier.

3. Engrenage comprenant une roue à denture hélicoïdale et un arbre de sortie, **caractérisé en ce que** la combinaison roue à denture hélicoïdale avec arbre de sortie est réalisée selon la revendication 1.

4. Moteur électrique équipé d'un engrenage, **caractérisé en ce que** l'engrenage est fabriqué selon la revendication 3.
